# EUROPÄISCHE PATENTSCHRIFT

(11) **EP 1 602 805 B1**
(45) Veröffentlichungstag und Bekanntmachung des Hinweises auf die Patenterteilung: **27.09.2006**
(21) Anmeldenummer: 05007236.2
(22) Anmeldetag: 02.04.2005
(51) Int. Cl.: F01N 3/20, B01D 53/94

(54) **Verfahren und Vorrichtung zum Beheizen eines in einem Behälter eines Kraftfahrzeugs mitgeführten Reduktionsmittels zur Abgasnachbehandlung**
Method and device for heating a reductant for exhaust gas treatment carried in a vessel of an vehicle
Méthode et dispositif pour réchauffer un agent réducteur pour le traitement postérieur de gaz d'échappement dans un réservoir d'un véhicule à moteur

(30) Priorität: 02.06.2004 DE 102004026866
(43) Veröffentlichungstag der Anmeldung: 07.12.2005
(73) Patentinhaber: MAN Nutzfahrzeuge Aktiengesellschaft, 80995 München (DE)
(72) Erfinder: Döring, Andreas, 80339 München (DE)

(56) Entgegenhaltungen:
- WO-A-00/21881
- WO-A-03/027454
- DE-A1- 4 432 576

## Beschreibung

Die Erfindung betrifft ein Verfahren und eine Vorrichtung zum Beheizen eines in einem Behälter eines Kraftfahrzeugs mitgeführten Reduktionsmittels zur Abgasnachbehandlung.

Zur Reduzierung der Stickoxidemission bei sauerstoffreichen Abgasen wird üblicherweise eine Verfahren eingesetzt, das unter der Bezeichnung "Selectiv-Catalytic-Reduction" Technologie (SCR) bekannt geworden ist. Als Reduktionsmittel wird dabei häufig gasförmiger Ammoniak (NH3), Ammoniak in wässriger Lösung, Harnstoff oder Harnstoff in wässriger Lösung eingesetzt, wobei bei den beiden letztgenannten der Harnstoff als Ammoniakträger fungiert. Gasförmiger Ammoniak und Ammoniak in wässriger Lösung sind üblicherweise dem stationären Einsatz, z. B. in Kraftwerken vorbehalten, in Kraftfahrzeugen dagegen ist die Verwendung von gasförmigen Ammoniak oder Ammoniak in wässriger Lösung wegen des hohen Gefährdungspotentials äußerst problematisch. Dort wird üblicherweise auf ungefährliche Stoffe, wie Harnstoff bzw. Harnstoff in wässriger Lösung als Reduktionsmittel ausgewichen. Um eine einfache Förderung durch Pumpen und eine volumetrische Mengenzugabe durch Dosierventile zu ermöglichen, bietet es sich an, nicht den festen Harnstoff, sondern die wässrige Harnstofflösung zu verwenden. Üblicherweise kommt dabei eine 32,5-prozentige eutektische Lösung nach DIN 70070 zum Einsatz. Die wässrige Harnstofflösung wird in solchen Systemen zunächst mittels einer Dosiereinrichtung vor einen Hydrolysekatalysator in die Auspuffanlage eingespritzt, im Hydrolysekatalysator in Ammoniak umgesetzt, der dann im eigentlichen SCR-Katalysator die Reduktion der Stickoxide bewirkt.

Problematisch bei Systemen, die mit wässriger Harnstofflösungen arbeiten ist, dass solche Lösungen einen relativ hohen Gefrierpunkt haben. Bei der vorstehend angesprochenen 32.5-prozentigen Lösung liegt er bei -11°C. Dieser hohe Gefrierpunkt hat zur Folge, dass derartige Systeme ohne zusätzlich Maßnahmen nur bedingt wintertauglich wären, da es bei Temperaturen unter - 11°C zu einem Auskristallisieren der Lösung kommt und dadurch eine dosierte Zugabe des Reduktionsmittels unmöglich gemacht ist. Abhilfe kann dadurch geschaffen werden, dass die das Reduktionsmittel enthaltende Lösung auf eine Temperatur gebracht oder auf einer Temperatur gehalten wird, die oberhalb der Kristallisationstemperatur der Lösung liegt. Dazu ist es notwendig, mit der Lösung in Verbindung stehende Teile zu beheizen, so dass ein Fördern und Dosieren der Lösung möglich bleibt, bzw. nach deren Einfrieren möglichst schnell wieder möglich wird. Während das Erwärmen des Reduktionsmittels in den Reduktionsmittelleitungen, dem Dosierventil und der Pumpe auf Grund ihrer großen spezifischen Oberflächen kein Problem darstellen, ist die Erwärmung des Reduktionsmittels im Vorratsbehälters schwierig.

Üblicherweise werden zur Erwärmung des Reduktionsmittels im Vorratsbehälters zwei unterschiedliche Wege beschritten, die unter anderem in der DE 100 52 077 A1 beschrieben sind. Entweder wird die Oberfläche des die wässrige Harnstofflösung enthaltenden Vorratsbehälters beheizt oder im Behälter selbst, also innerhalb der im Behälter enthaltenen Lösung, sind Heizelemente angeordnet. Beide Lösungsansätze sind problematisch. Wegen der, im Verhältnis zu seinem Volumen, geringen Oberfläche des Vorratsbehälters, kann über diese nur eine relativ geringe Wärmemenge in den Tank eingebracht werden. Das Erwärmen über im Vorratsbehälter angeordnete Heizelemente, wie Heizwendeln oder -schläuche, erlaubt es zwar, die Wärmetauscheroberfläche erheblich zu erhöhen, allerdings ergeben sich dadurch weiter Probleme. Durch die Volumenzunahme der Harnstoff-Wasser-Lösung bei der Auskristallisation treten sehr hohe Drücke und Scherkräfte im Tank auf, die zu einer Zerstörung der in dem Tank verbauten Heizvorrichtungen führen können. Ist die Lösung erst zum Teil auskristallisiert, bilden sich größere, in der Lösung schwimmende Klumpen, die bei einem in Bewegung befindlichen Kraftfahrzeug, auf Grund der Beschleunigungsvorgänge, gegen die Heizvorrichtung prallen und diese ebenfalls zerstören können

Weiterhin ist aus der WO 00/21881 eine Anordnung bekannt, bei der eine in einem Vorratsbehälter befindliche, als Reduktionsmittel dienende wässrige Harnstofflösung in einen zum Vorratsbehälter externen Zirkulationskreislauf beheizbar ist. Zum Auftauen des Vorratsbehälters ist auch hier eine Heizeinrichtung im Vorratsbehälter vorgesehen, die die vorstehend bereits angesprochenen Probleme aufwirft.

Es ist daher Aufgabe der Erfindung, ausgehend von dem genannten Stand der Technik ein Verfahren und eine Vorrichtung zum Beheizen eines in einem Behälter eines Kraftfahrzeugs mitgeführten Reduktionsmittels zur Abgasnachbehandlung anzugeben, mit dem bzw. mit der das Einfrieren des in einem Behälter enthaltenen Reduktionsmittels verhindert wird oder im Falle dass das Reduktionsmittel bereits eingefroren ist, mit dem bzw. mit der das Auftauen möglichst rasch erfolgen kann.

Gelöst wird die Aufgabe mit dem Verfahren gemäß Anspruch 1 und der Vorrichtung gemäß Anspruch 3. Eine vorteilhafte Ausgestaltung des Verfahrens ist in Anspruch 2 gekennzeichnet, vorteilhafte Ausgestaltungen der Vorrichtung nach Anspruch 3 finden sich in den Kennzeichen der Ansprüche 4 bis 11.

Die Erfindung geht davon aus, dass die für das Verhindern des Einfrierens oder für den Auftauvorgang notwendige Wärmemenge dem Reduktionsmittel außerhalb des Reduktionsmittel-Vorratsbehälters zugeführt wird, dadurch, dass das Reduktionsmittel an einer Entnahmestelle dem Behälter entnommen, erwärmt und an einer Rückführstelle wieder zugeführt wird und dass der Reduktionsmittel-Vorratsbehälter entlang einer gedachten Linie zwischen der Rückführstelle und der Entnahmestelle beheizbar ist. Damit wird einerseits erreicht, dass das Verhältnis zwischen beheizbarer Oberfläche und zu beheizendem Volumen relativ groß und das zu beheizende Volumen relativ klein gewählt werden kann, wodurch ein effizientes Auftauen erreicht wird und eine Beschädigung der Heizeinrichtung beim Einfrieren des Reduktionsmittels ausgeschlossen ist.

Das Erwärmen erfolgt dabei in vorteilhafter Weise so, dass an oder in einer fließtechnischen Verbindung, die die Entnahmestelle mit der Rückführstelle verbindet, eine Heizeinrichtung das Reduktionsmittel erwärmt. Bei der Fleißtechnischen Verbindung kann es sich gleichermaßen um einen kleinen Behälter oder um eine Rohrleitungen handeln, auch eine Kombination ist denkbar. Die Heizeinrichtung kann gleichzeitig zum Beheizen des Reduktionsmittel-Vorratsbehälters dienen.

Weiter kann es vorgesehen sein, dass eine Erwärmung des Bereiches der Entnahnestelle und /oder der Rückführstelle und /oder der ganzen fließtechnischen Verbindung erfolgt, so dass bei vollständig gefrorenem Reduktionsmittel ein Auftauen möglichst rasch durchführbar ist.

Für die Bereitstellung der zum Erwärmen des Reduktionsmittels in der fließtechnischen Verbindung bzw. des Reduktionsmittel-Vorratsbehälters entlang der gedachten Verbindungslinie zwischen Rückführstelle und Entnahmestelle notwendigen Wärmemenge kommen alle in einem Kraftfahrzeug vorhandenen Wärme- bzw. Energiequellen in Frage. Die notwendige Wärmemenge kann in vorteilhafter Weise aus dem Kühlwasserkreislauf, dem Schmiermittelkreislauf, dem Abgastrakt, der durch Kompression aufgeheizten Ladeluft - wenn eine entsprechende Kompressionseinrichtung vorhanden ist - entnommen oder mittels des elektrischen Bordnetzes des Kraftfahrzeuges über elektrische Heizelemente erzeugt werden.

Zur Steigerung der Durchflussrate kann eine Pumpe eingesetzt werden, die das erwärmte Reduktionsmittel durch die fließtechnische Verbindung fördert. Besonders vorteilhaft ist es in diesem Zusammenhang, die ohnehin zur Förderung des Reduktionsmittels in den Abgastrakt vorhandene Pumpe zu nutzen, dies kann alternativ oder parallel geschehen.

Weiterhin ist die fließtechnische Verbindung in vorteilhafter Weise so ausgebildet, dass sie durch das Einfrieren des darin befindlichen Reduktionsmittels nicht beschädigbar ist. Dies wird Vorteilhaft dadurch bewerkstelligt, dass sie zumindest in Teilen elastische Elemente enthält, die der Volumenänderung des einfrierenden Reduktionsmittels folgen.

Beispiel der Erfindung und weitere vorteilhafte Ausgestaltungen sind nachfolgend in Verbindung mit den Figuren näher erläutert.

Es zeigen:
- Fig. 1: eine schematische Darstellung der erfindungsgemäßen Anordnung
- Fig. 2: eine erste Vorrichtung zum Erwärmen des Reduktionsmittels
- Fig. 3: eine zweite Vorrichtung zum Erwärmen des Reduktionsmittels
- Fig. 4: einen Querschnitt durch eine frostsicher ausgeführte Rohrleitung

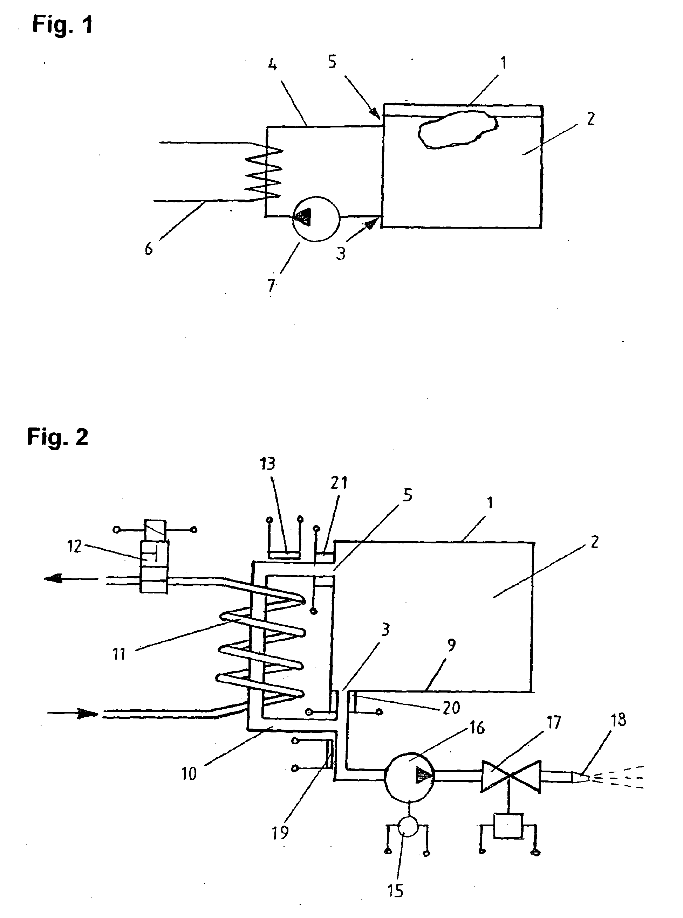

In Fig. 1 ist die erfindungsgemäße Anordnung schematisch dargestellt. An einem Vorratsbehälter 1, der das Reduktionsmittel 2 enthält, ist in einem Bereich, in dem das Reduktionsmittel 2 in flüssiger Form vorliegt, eine Entnahmestelle 3 angebracht. Diese ist über eine fließtechnische Verbindung 4 mit einer Rückführstelle 5, die sich ebenfalls am Vorratsbehälters 1 befindet, verbunden. Bei der fließtechnischen Verbindung 4 kann es sich um eine rohrförmige Leitung und /oder um einen gegenüber dem Vorratsbehälter 1 kleineren Behälter handeln.

In diese fliestechnische Verbindung 4 wird ein Wärmetauscher 6 integriert, über den dem Reduktionsmittel 2 Wärme zugeführt wird. Ist die Entnahmestelle 3 tiefer als die Rückführung 5 angeordnet, kommt es in der Verbindung, wegen der sich ausbildenden Dichteunterschiede und der freien Konvektion, zu einer aufwärtsgerichteten Strömung, über die eine kontinuierliche Wärmezufuhr in den Vorratsbehälter 1 gegeben ist. Auf diese Weise wird einerseits das Einfrieren des Reduktionsmittels 2 im laufenden Betrieb verhindert, andererseits wird bei Beginn des Betriebes bereits ganz oder teilweise eingefrorenes Reduktionsmittel wieder aufgetaut.

Die notwendige Wärmemenge kann mit Hilfe eines elektrischen Wärmetauschers zugeführt werden, aber auch die Verwendung anderer Wärmetauscher, die mit erwärmtem Motorkühlmittel, erwärmtem Motormittel, heißem Abgas oder erwärmter Ladeluft als wärmeabgebendem Medium beschickt werden, sind einsetzbar.

Um auch eine Funktion des Systems bei komplett durchgefrorenem Inhalt des Vorratsbehälters 1 sicherzustellen, ist es vorteilhaft, den Vorratsbehälter 1 an der Entnahme- und Rückführstelle 3, 5 und/oder die Entnahme- und Rückführstelle 3, 5 selbst, sowie die Oberfläche des Vorratsbehälters 1 entlang einer gedachten Linie zwischen Entnahmestelle 5 und Rückführstelle 3 zu beheizen, um so zumindest einen kleinen Teil des Vorratsbehälterinhaltes zu verflüssigen um einen Flüssigkeitskreislauf über die fließtechnische Verbindung 4 bzw. den in diese integrierten Wärmetauscher sicherzustellen.

Zur Vermeidung der Kristallisation des Reduktionsmittels in der fließtechnischen Verbindung 4, ist zusätzlich deren Beheizung auf der gesamten Strecke zwischen der Entnahmestelle 3 und der Rückführungsstelle 5 denkbar. Wie schon beim Wärmetauscher ausgeführt, kommen zur Erwärmung elektrischen Heizelementen, erwärmtes Motorkühlmittel, erwärmtes Motorenschmiermittel, heißes Abgas oder erwärmter Ladeluft in Frage. Ist die benötigte Wärmemenge nicht zu groß, kann auf einen speziellen Wärmetauscher verzichtet werden, stattdessen ist die notwendige Wärmemenge dann ausschließlich über diese Rohr- bzw. Schlauchverbindung in den Kreislauf einzubringen.

In Fällen, in denen der Flüssigkeitsdurchsatz mit Hilfe der freien Konvektion durch die fließtechnische Verbindung zu gering ist, kann zusätzlich eine Pumpe 7 in diese integriert werden.

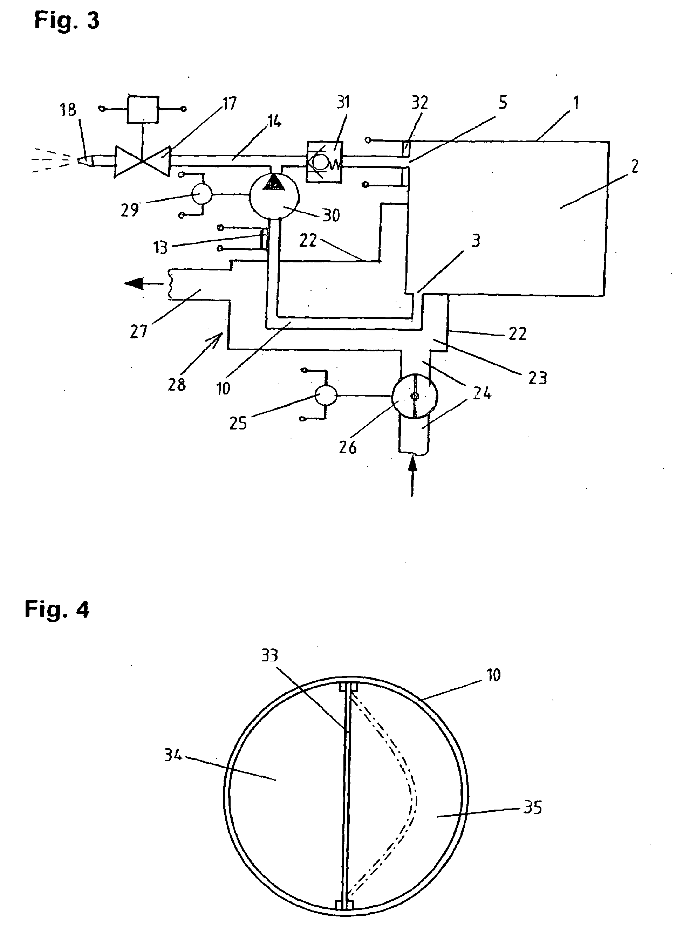

Ausgehend von der vorstehend beschriebenen prinzipiellen Wirkungsweise, bzw. dem prinzipiellen Aufbau, sollen nun anhand der Fig. 2 und der Fig. 3, die Beispiele der erfindungsgemäßen Anordnungen in ihrer technischen Ausführung zeigen, Näheres zum Aufbau und zur Wirkungsweise ausgeführt werden.

Fig. 2 zeigt einen mit Reduktionsmittel 2 gefüllten Vorratsbehälter 1 der am Behälterboden 9 eine Entnahmestelle 3 aufweist. Die Entnahmestelle 3 ist über eine Rohrleitung 10 mit einer Rückführstelle 5, die im oberen Bereich des Vorratsbehälters 1 in diesen einmündet, verbunden. Um die Rohrleitung 10 ist eine Heizspirale 11 gelegt, die an den Kühlmittelkreislauf des Kraftfahrzeugmotors (nicht dargestellt) angeschlossen ist, derart, dass durch die motorischen Verbrennungsvorgänge erwärmtes Kühlmittel durch die Heizspirale 11 fließen kann. Im Bereich der Entnahmestelle 3 ist um die Rohrleitung 10 eine erste elektrische Heizmanschette 20 gelegt, eine zweite elektrische Heizmanschette 21 befindet sich, um die Rohrleitung 10 gelegt, im Bereich der Rückführstelle 5. Zur Steuerung des Durchflusses durch die Heizspirale 11 ist ein elektrisch betriebenes Magnetventil 12 an der Heizspirale 11 angeordnet. Die Temperaturüberwachung des erwärmten Reduktionsmittels erfolgt mittels eines nach der Heizspirale 11 an der Rohrleitung 10 angeordneten Temperaturfühlers 13.

Das zur Zuführung in den Abgastrakt vorgesehene Reduktionsmittel wird mittels einer von der Rohrleitung 10 im Bereich der Entnahmestelle 3 abzweigenden Zuführleitung 14 dieser entnommen. Der Fördervorgang geschieht dabei mittels einer Pumpe 16, die von einem Elektromotor 15 angetrieben, das Reduktionsmittel über ein elektrisch betriebenes Dosierventil 17 und eine Einspritzdüse 18 in den Abgastrakt einspritzt. Zur Temperaturkontrolle des dem Abgastrakt zuzuführenden Reduktionsmittels ist in der Zuführleitung 14, vor der Pumpe 16, ein weiterer Temperaturfühler 19 angeordnet. Alle elektrischen Komponenten 12, 13, 15, 17, 19, 20, 21 sind an ein in Fig. 2 nicht dargestelltes Steuergerät angeschlossen und werden von diesem angesteuert.

Zur Erläuterung der Funktionsweise ist angenommen, dass das Kraftfahrzeug im Betrieb gesetzt wird. Zu diesem Zeitpunkt befindet sich die Vorrichtung in ihrem Grundzustand, alle elektrischen Antriebe und die Heizmanschetten 20, 21 sind abgeschaltet, das Dosierventil und das Magnetventil sind geschlossen. Mit dem in Betreib setzen erfolgt das Einschalten der Steuereinheit, die dann einen Steuerablauf initialisiert, der für alle Anfangstemperaturen des Reduktionsmittels gleich ist. Die Steuereinheit öffnet zunächst das Magnetventil 12, so dass Kühlmittel durch die Heizspirale 11 fließen kann. Gleichzeitig steuert die Steuereinheit die Heizmanschette 20 und die weitere Heizmanschette 21 an. Durch die Erwärmung des Reduktionsmittel in der Rohrleitung 10 bildet sich durch Dichteunterschiede und Konvektion eine stabile Strömung von der Entnahmestelle 3 durch die Rohrleitung 10 zur Rückführstelle 5 aus, so dass dem Vorratsbehälter 1 ständig erwärmtes Reduktionsmittel zugeführt wird und sich dessen Inhalt ebenfalls erwärmt.

Überschreitet das Reduktionsmittel eine vorgegebenen Temperaturschwelle wird dieser Umstand von der Steuereinheit über den Temperaturfühler 13 erfasst, das Magnetventil 12 geschlossen und die Heizmanschetten 20, 21 abgeschaltet, so dass keine weitere Erwärmung des Reduktionsmittels 2 erfolgt. Dies ist notwendig um eine Überhitzung des Reduktionsmittels, die sich negativ auf seine Wirksamkeit auswirken würde, zu verhindern. Analog wird beim erneuten Unterschreiten dieser Temperaturschwelle das Magnetventil 12 wieder geöffnet und die Heizmanschetten 20, 21 wieder zugeschaltet, so dass sich das Reduktionsmittel erneut über die Heizspirale 11 erwärmt. Das Reduktionsmittel wird so auf einem annähernd konstanten Temperaturniveau gehalten. Um ständiges Umschalten zu vermeiden, ist es dabei sinnvoll das wieder Öffnen des Magnetventils 12 bzw. das wieder Einschalten der Heizmanschetten 20, 21 zeitlich verzögert oder bei Unterschreiten einer zweiten Temperaturschwelle die unterhalb der ersten Temperaturschwelle liegt, vorzunehmen.

Die Entnahme des Reduktionsmittels 2 zum Zwecke des Einspritzens in den Abgastrakt geschieht in der Weise, dass die Steuereinheit mittels des weiteren Temperaturfühlers 19, der nahe der Entnahmestelle 3 an der Zuführleitung 14 angeordnet ist, feststellt, ob ein Temperaturniveau oberhalb einer vorgegebenen Minimaltemperatur vorliegt. Die Minimaltemperatur entspricht dabei einer Temperatur bei der das Reduktionsmittel gerade noch nicht auskristallisiert. Ist diese Minimaltemperatur überschritten, steuert die Steuereinheit einerseits den Motor 15 der Pumpe 16 an und dosiert andererseits das Reduktionsmittel mit dem Dosierventil 17 in Abhängigkeit von durch die Steuereinheit ermittelten aktuellen Motordaten und/ oder gespeicherten Kennfeldern und/ oder von Sensoren ermittelten Abgaswerten, so dass über die Düse 18 die jeweils benötigte Menge an Reduktionsmittel in den Abgasstrom eingespritzt wird. Bei Unterschreiten der vorstehend angesprochenen Minimaltemperatur wird der Motor 15 über die Steuereinheit stillgesetzt und das Dosierventil 17 von der Steuereinheit geschlossen.

Beim Abschalten des Kraftfahrzeugs stellt die Steuereinheit in einer Ausschaltroutine einen definierten Grundzustand der Vorrichtung her, dazu werden das Dosierventil 17 und das Magnetventil 12 geschlossen, und alle elektrischen Antriebe sowie die Heizmanschetten 20, 21 abgeschaltet.

Zum Auftauen von vollständig durchgefrorenem Reduktionsmittel 2 im Vorratsbehälter 1 ist vorgesehen, die Oberfläche des Vorratsbehälters 1 entlang einer gedachten Verbindungslinie zwischen Rückführstelle 5 und Entnahmestelle 3 durch die in diesem Bereich angeordnete Heizspirale 11 ebenfalls zu erwärmen. Dadurch lässt sich ein Kanal in dem gefrorenen Reduktionsmittel schaffen, in dem das bereits verflüssigte Reduktionsmittel über den Vorratsbehälter 1 und die Rohrleitung 10 zirkulieren kann. Auf diese Weise wird, wegen des höheren Durchsatzes an flüssigem Reduktionsmittel durch den gebildeten Kreislauf, der Auftauvorgang erheblich beschleunigen.

Bei geeigneter Anordnung der Heizspirale 11 am Vorratsbehälter 1 ist es weiter möglich, die Rückführstelle 5 und die Entnahmestelle 3 mit zu beheizen, so dass die elektrischen Heizmanschetten 20, 21 entfallen können. Andererseits kann die Oberfläche des Vorratsbehälters entlang der gedachten Verbindungslinie zwischen Rückführstelle 5 und Entnahmestelle 3, dann, wenn eine Beheizung durch die Heizspirale 11 aus konstruktiven Gründen ungünstig ist, durch ein separates elektrisches Heizelement (nicht dargestellt) beheizt werden. In Vereinfachung der Anordnung ist es dabei denkbar, die elektrischen Heizelementen 20, 21 und das separate Heizelement zu einem einzigen gemeinsamen elektrischen Heizelement zusammenzufassen.

Abweichend vom in Verbindung mit der Fig. 2 beschriebenen Ausführungsbeispiel kann statt erwärmtem Kühlmittel aus dem Kühlmittelkreislauf auch erwärmtes Schmiermittel aus dem Schmiermittelkreislauf des Kraftfahrzeugs durch die Heizspirale 11 geleitet werden, am Aufbau und an der Funktionsweise der Vorrichtung ändert sich dadurch nichts.

Eine weitere Ausführungsmöglichkeit der erfindungsgemäßen Vorrichtung ist in Fig. 3 gezeigt. Auch hier ist eine Rohrleitung 10 vorgesehen, die die Entnahmestelle 3 am Vorratsbehälter 1 mit der ebenfalls an diesem angeordneten Rückführstelle 5 verbindet. Die Rohrleitung 10 ist angrenzend an die Entnahmestelle 3 doppelwandig ausgeführt, derart, dass sich zwischen Rohrleitung 10 und umgebender Außenhülle 22 ein Hohlraum 23 ausbildet, der gegenüber der Rohrleitung 10 einerseits und der die Außenhülle 22 umgebenden Atmosphäre andererseits abgeschlossen ist. An der Außenhülle 22 sind eine Zuführung 24 und eine Rückführung 27 angeordnet, über die heiße Verbrennungsgase aus dem Abgastrakt durch den Hohlraum 23 geleitet werden, so dass sich ein Abgaswärmetauscher 28 ergibt. Die Abgasmenge ist über ein in die Zuführung 24 integriertes Drosselventil 26 steuerbar, das mittels eines elektrischen Antriebs 25 verstellbar ist. An den Abgaswärmetauscher 28 anschließend ist mittels des Temperaturfühlers 13 die Temperatur des in der Rohrleitung 10 geführten Reduktionsmittels abgreifbar, das über eine in die Rohrleitung 10 integrierte, von einem Elektromotor 29 angetriebene Förderpumpe 30 gefördert wird. Zwischen Förderpumpe 30 und Rückführstelle 5 ist in die Rohrleitung 10 ein druckgesteuertes Ventil 31 eingebaut, die Rückführstelle 5 ist mittels eines an der Außenseite des Vorratsbehälters 1 angeordneten Heizelementes 32 elektrisch beheizbar.

Die Zuführung des Reduktionsmittels in den Abgastrakt erfolgt über eine zwischen Förderpumpe 30 und druckgesteuertem Ventil 31 von der Rohrleitung 10 abzweigende Zuführleitung 33. In der Zuführleitung 33 ist das bereits aus Fig. 2 bekannte, elektrisch betriebene Dosierventil 17 angeordnet, das die über die Düse 18 in das Abgas einzuspritzende Reduktionsmittelmenge zumisst. Alle elektrischen Komponenten 13, 15, 17, 25, 32 sind auch bei diesem Ausführungsbeispiel an eine in Fig. 3 nicht dargestellte Steuereinheit angeschlossen und werden von dieser angesteuert.

Zur Erläuterung der Funktionsweise der Vorrichtung ist auch hier angenommen, dass das Kraftfahrzeug in Betrieb gesetzt wird. Zu diesem Zeitpunkt befindet sich die Vorrichtung in ihrem Grundzustand, alle elektrischen Antriebe und das Heizelement 32 sind abgeschaltet, das Dosierventil und das Drosselventil sind geschlossen. Mit dem in Betrieb setzen erfolgt auch nach diesem Beispiel das Einschalten der Steuereinheit, die dann einen Steuerablauf initialisiert, der für alle Anfangstemperaturen des Reduktionsmittels gleich ist. Die Steuereinheit öffnet zunächst das Drosselventil 26, so dass heißes Abgas durch den Abgaswärmetauscher 28 strömen kann. Gleichzeitig steuert die Steuereinheit das Heizelement 32 an. Durch das Heizelement 32 und das heiße Abgas erwärmen sich Entnahmestelle 3 und Rohrleitung 10 rasch und die Wärme geht auf das in diesem Bereich befindliche Reduktionsmittel über. Hat sich das Reduktionsmittel in der Rohrleitung 10 so weit erwärmt, dass eine erste Temperaturschwelle überschritten ist, stellt dies die Steuereinheit über den Temperaturfühler 13 fest und aktiviert den Elektromotor 15 der Pumpe 16, so dass sich zwischen der Pumpe 16 und dem druckgesteuerten Ventil 31 ein Druck aufbaut, der von dem druckgesteuerten Ventil 31, das bei überschreiten einer Druckschwelle den Durchfluss durch die Rohrleitung 10 öffnet, auf einem konstanten Niveau gehalten wird. Das in der Zuführleitung 14 befindliche Dosierventil 17 ist zu diesem Zeitpunkt geschlossen. Durch die Pumpe 16 wird in diesem Zustand ständig Reduktionsmittel durch die Rohrleitung 10 gefördert, das sich durch den Abgaswärmetauscher 28 erwärmt. Übersteigt die Temperatur des Reduktionsmittels in der Rohrleitung 10 eine zweite Temperaturschwelle, stellt dies die Steuereinheit über den Temperaturfühler 13 fest und öffnet das Dosierventil 17 in Abhängigkeit von durch die Steuereinheit ermittelten aktuellen Motordaten und gespeicherten Kennfeldern. Durch das mittels Pumpe 16 und druckgesteuertem Ventil 31 geschaffene Druckniveau wird nun über die Düse 18 Reduktionsmittel in das Abgas eingespritzt. Überschreitet die Reduktionsmitteltemperatur in der Rohrleitung 10 ein drittes Temperaturniveau, stell dies die Steuereinheit über den Temperaturfühler 13 wiederum fest und steuert über den elektrischen Antrieb 25 das Drosselventil 26 in eine Stellung, in der kein Abgas mehr in den Abgaswärmetauscher 28 gelangt und schaltet das Heizelement 32 ab. Entsprechend wird beim Unterschreiten des dritten Temperaturniveaus das Drosselventil 26 wieder geöffnet und das Heizelement 32 wieder eingeschaltet, so dass sich eine annähernd konstante Temperatur des Reduktionsmittels einstellt. Um ständiges Umschalten zu vermeiden, ist es auch hier sinnvoll das wieder Öffnen des Drosselventils 26 bzw. das wieder Einschalten des Heizelementes 32 zeitlich verzögert oder bei Unterschreiten einer weiteren Temperaturschwelle, die unterhalb der dritten Temperaturschwelle liegt, vorzunehmen.

Beim Abschalten des Kraftfahrzeugs versetzt die Steuereinheit die Vorrichtung in einen Grundzustand, in dem sie in einer Abschaltroutine das Dosierventil 17 und das Drosselventil 26 schließt und alle elektrischen Antriebe und das Heizelement 32 abschaltet.

In Abwandlung des vorstehend beschriebenen Beispiels nach Fig. 3 kann das druckgesteuerte Ventil 31 durch ein Magnetventil ersetzt sein, das den Durchfluss des Reduktionsmittels durch die Rohrleitung 10 gesteuert durch die Steuereinheit so lange frei gibt, bis ein bestimmtes vorgegebenes Temperaturniveau, das eine sichere Zuführung des Reduktionsmittels in den Abgastrakt erlaubt, erreicht ist.

Zur Vergrößerung der Wärmetauscher-Fläche kann es weiter vorgesehen sein, die Rohrleitung 10 im Innern des Wärmetauschers 28 wendelförmig auszubilden, zu profilieren oder als Rohrbündel auszuführen.

Das Auftauen von vollständig durchgefrorenem Reduktionsmittel 2 im Vorratsbehälter 1 wird auch in diesem Fall dadurch bewerkstelligt, dass die Oberfläche des Vorratsbehälters 1 entlang einer gedachten Verbindungslinie zwischen Rückführstelle 5 und Entnahmestelle 3 durch den in diesem Bereich angeordneten Abgaswärmetauscher 23 erwärmt wird, wie dies analog in Verbindung mit dem Beispiel nach Fig. 2 beschrieben ist. Der Abgaswärmetauscher 28 kann zu diesem Zweck den Konturen des Vorratsbehälters 1 folgend ausgebildet sein und gegebenenfalls das Heizelement 32 mit ersetzen. Alternativ ist es natürlich auch hier möglich, das Erwärmen von Rückführstelle, Entnahmestelle und den Bereich der Oberfläche des Vorratsbehälters zwischen diesen mittels eine gemeinsamen elektrischen Heizelementes zu bewerkstelligen.

In Abwandlung des Beispiels nach Fig. 3 kann der Wärmetauscher statt mit heißem Abgas mit durch Komprimierung erwärmter Ladeluft beschickt werden, am Aufbau und an der Funktionsweise der Vorrichtung ändert sich dadurch nichts.

Weiterhin kann es vorgesehen sein, die Rohrleitung 10 ganz oder in Teilbereichen so auszubilden, dass deren Volumen der Ausdehnung des einfrierenden Reduktionsmittels folgt. Im einfachsten Fall ist dazu eine elastischer Schlauch verwendbar. Im Innern des Wärmetauschers ist hingegen der Einsatz von Materialien notwendig, die einen möglichst geringen Wärmeübergangswiderstand aufweisen, dies sind insbesondere Metalle.

Ein Beispiel für eine Frostsichere Ausbildung der Rohrleitung im Innern eines Wärmetauschers ist in Fig. 4 gezeigt.

Das Innere der im Querschnitt gezeigten, in einem Wärmetauscher (nicht dargestellt) angeordneten Rohrleitung 10 ist in Längsrichtung mittels einer elastische Membrane 33 Reduktionsmitteldicht in zwei Teilbereiche 34, 35 aufgeteilt, wobei der eine erste Bereich 34 vom Reduktionsmittel durchflossen, der andere zweite Bereich 35 dagegen luflgefüllt ist. Gefriert das Reduktionsmittel im ersten Bereich 34, kann es sich unter entsprechender Verformung der elastischen Membrane 33 gegen den Luftdruck im zweiten Bereich 35 ausdehnen. Nach dem Auftauen des Reduktionsmittels nimmt die Membrane 33 ihre ursprüngliche Form wieder an. Die elastische Membrane 33 kann dabei aus einem gummielastischen Material bestehen, aber auch der Einsatz von profilierten Metallmembranen ist denkbar.

Ein ähnlicher Effekt ist in Abwandlung des vorstehenden Beispiels dadurch erreichbar, dass in der Rohrleitung ein Reduktionsmitteldichter elastisch komprimierbarer Verdrängungskörper verankert wird. Durch das einfrierende Reduktionsmittel wird dieser zusammengepresst und nimmt nach dem Auftauen seine ursprüngliche Form wieder an.

Eine weitere, von den Beispielen nach Fig. 1 bis Fig. 3 abweichende Möglichkeit den Wärmetauscher auszubilden besteht darin, in die Rohrleitung 10 einen oder mehrere kleine Behälter einzufügen oder die Rohrleitung 10 selbst als kleinen Behälter auszuführen, wobei die Behälter vorzugsweise über ihre Oberfläche beheizbar sind. Bei kleinen Behältern treten die Probleme, die bei der Erwärmung des Reduktionsmittels im Vorratsbehälter gegeben sind, nicht auf Die in Verbindung mit der Rohrleitung 10 angesprochenen Maßnahmen zur Kompensation der Volumenausdehnung beim Einfrieren des Reduktionsmittels lassen sich natürlich auch auf die kleinen Behälter anwenden.

Schließlich ist es auch denkbar, die Rohrleitung 10 oder den vorstehend erwähnten kleinen Behälter, sowie den Wärmetauscher einstückig mit dem Vorratsbehälter auszuführen. Auch mit einer solchen Anordnung lässt sich das erfindungsgemäße Verfahren durchführen.

Die vorstehend beschriebenen Ausführungen, sowohl des Verfahrens als auch der Vorrichtung lassen sich selbstverständlich mit dem Fachmann zugänglichem Fachwissen auf vielfaltige Weise ausgestalten, ohne den grundlegenden erfinderischen Gedanken zu verlassen, es kommt diesen Ausführungsformen damit nur Beispielcharakter zu.

## Patentansprüche

1. Verfahren zum Beheizen eines in einem Vorratsbehälter eines Kraftfahrzeugs mitgeführten Reduktionsmittels zur Abgasnachbehandlung, wobei das Reduktionsmittel (2) dem Vorratsbehälter (1) an einer Entnahmestelle (3) entnommen, erhitzt und an einer Rückführstelle (4) wieder zugeführt wird und die Entnahme und Rückführung mittels einer fließtechnischen Verbindung (4, 10) und das Erhitzen mittel eines daran oder darin angeordneten Wärmetauschers (6, 11, 28) erfolgt, **dadurch gekennzeichnet, dass** der Vorratsbehälter (1) entlang einer gedachten Verbindungslinie zwischen Rückführstelle (5) und Entnahmestelle (3) beheizbar ist.

2. Verfahren nach einem der vorhergehenden Ansprüche, **dadurch gekennzeichnet, dass** das Erhitzen des Reduktionsmittels (2) und/ oder das Beheizen des Vorratsbehälters (1) entlang der gedachten Verbindungslinie zwischen Rückführstelle (5) und Entnahmestelle (3), mittels Wärmeenergie aus dem Kühlmittelkreislauf und/oder aus dem Schmiermittelkreislauf und/ oder aus dem Abgastrakt und/oder mittels Wärmeenergie von aus dem elektrischen Bordnetz des Kraftfahrzeugs gespeisten Heizelementen erfolgt.

3. Vorrichtung zum Beheizen eines in einem Vorratsbehälter eines Kraftfahrzeugs mitgeführten Reduktionsmittels zur Abgasnachbehandlung, wobei am Vorratsbehälter (1) eine Entnahmestelle (3) und eine Rückführstelle (5) vorgesehen sind, wobei Entnahmestelle (3) und Rückführstelle (5) außerhalb des Vorratsbehälters (1) fließtechnisch miteinender verbunden sind und zum Beheizen des Reduktionsmittels (2) außerhalb des Vorratsbehälters (1) zwischen der Entnahmestelle (3) und der Rückführstelle (5) ein Wärmetauscher (6, 11, 28) vorgesehen ist, **dadurch gekennzeichnet, dass** der Vorratsbehälter (1) entlang einer gedachten Verbindungslinie zwischen Rückführstelle (5) und Entnahmestelle (3) beheizbar ist.

4. Vorrichtung nach Anspruch 3, **dadurch gekennzeichnet, dass** in die fließtechnische Verbindung (4, 10) eine Pumpe (7, 30) zur Steigerung der Durchflussrate integriert ist.

5. Vorrichtung nach Anspruch 4, **dadurch gekennzeichnet, dass** die Pumpe (7, 30) beheizbar ist.

6. Vorrichtung nach Anspruch 4 oder 5, **dadurch gekennzeichnet, dass** die Pumpe (30) alternativ oder Parallel zur Förderung des Reduktionsmittels (2) in den Abgastrakt dient.

7. Vorrichtung nach Anspruch 3, **dadurch gekennzeichnet, dass** das Beheizen mittels des zwischen Entnahmestelle (3) und Ruckführstelle (5) angeordneten Wärmetauschers (11, 28) erfolgt.

8. Vorrichtung nach Anspruch 3, **dadurch gekennzeichnet, dass** das Beheizen mittels einer elektrischen Heizanordnung erfolgt.

9. Vorrichtung nach einem der vorhergehenden Ansprüche 3 - 8, **dadurch gekennzeichnet, dass** die fließtechnische Verbindung (4, 10) zwischen der Entnahmestelle (3) und der Rückführstelle (5) so ausgebildet ist, dass sie durch das Einfrieren ihres Inhaltes nicht beschädigbar ist.

10. Vorrichtung nach Anspruch 9, **dadurch gekennzeichnet, dass** die fließtechnische Verbindung (4, 10) zumindest in Teilen elastisch ist, derart dass sie der Volumenausdehnung ihres Inhaltes beim Einfrieren folgt.

11. Vorrichtung nach einem der vorhergehenden Ansprüche 3-10, **dadurch gekennzeichnet, dass** der Wärmetauscher (11, 28) seine Energie aus dem Kühlwasser und /oder aus dem Schmieröl und /oder aus dem Abgas und /oder aus der erwärmten Ladeluft und /oder aus dem elektrischen Strom des Bordnetzes des Kraftfahrzeugs bezieht.

## Claims

1. Method for heating a reducing agent for exhaust-gas aftertreatment, said reducing agent being held in a storage tank of a motor vehicle, wherein the reducing agent (2) is extracted from the storage tank (1) at an extraction point (3), is heated and returned at a return point (4), said extraction and return being accomplished by means of a fluidic connection (4, 10) and said heating being accomplished by means of a thereon or therein disposed heat exchanger (6, 11, 28), **characterised in that** the storage tank (1) is heatable along an imaginary connecting line between return point (5) and extraction point (3).

2. Method according to any one of the preceding claims, **characterised in that** the heating of the reducing agent (2) and/ or the heating of the storage tank (1) along the imaginary connecting line between return point (5) and extraction point (3) is accomplished by means of heat energy from the cooling system and/or from the lubricating system and/ or from the exhaust system and/or by means of heat energy from heating elements supplied from the vehicle's electrical system.

3. Device for heating a reducing agent for exhaust-gas aftertreatment, said reducing agent being held in a storage tank of a motor vehicle, an extraction point (3) and a return point (5) being provided on the storage tank (1), wherein extraction point (3) and return point (5) are fluidically interconnected outside the storage tank (1) and wherein, for the heating of the reducing agent (2), a heat exchanger (6, 11, 28) is provided outside the storage tank (1) between the extraction point (3) and the return point (5), **characterised in that** the storage tank (1) is heatable along an imaginary connecting line between return point (5) and extraction point (3).

4. Device according to claim 3, **characterised in that** a pump (7, 30) for increasing the flow rate is integrated into the fluidic connection (4, 10).

5. Device according to claim 4, **characterised in that** the pump (7, 30) is heatable.

6. Device according to claim 4 or 5, **characterised in that** the pump (30) serves alternatively or simultaneously to pump the reducing agent (2) into the exhaust system.

7. Device according to claim 3, **characterised in that** the heating is accomplished by means of the heat exchanger (11, 28) disposed between extraction point (3) and return point (5).

8. Device according to claim 3, **characterised in that** the heating is accomplished by means of an electrical heating arrangement.

9. Device according to any one of preceding claims 3 to 8, **characterised in that** the fluidic connection (4, 10) between the extraction point (3) and the return point (5) is of such design that it cannot be damaged by the freezing of its contents.

10. Device according to claim 9, **characterised in that** the fluidic connection (4, 10) is at least partially flexible so as to accommodate the expansion in volume of its contents when they freeze.

11. Device according to any one of preceding claims 3 to 10, **characterised in that** the heat exchanger (11, 28) obtains its energy from the cooling water and /or from the lubricating oil and /or from the exhaust gas and /or from the heated charge air and /or from the electrical current of the vehicle's electrical system.

## Revendications

1. Procédé pour réchauffer un agent réducteur pour le traitement postérieur de gaz d'échappement dans un réservoir de stockage d'un véhicule à moteur, l'agent réducteur (2) étant prélevé du réservoir de stockage (1) au niveau d'un point de prélèvement (3), chauffé et réinjecté au niveau d'un point de recyclage (5), et le prélèvement et le recyclage se faisant au moyen d'un raccord d'écoulement (4, 10) et le chauffage au moyen d'un échangeur de chaleur (6, 11, 28) monté dessus ou à l'intérieur,
**caractérisé en ce que**
le réservoir de stockage (1) peut être chauffé le long d'une ligne de liaison imaginaire entre le point de recyclage (5) et le point de prélèvement (3).

2. Procédé selon la revendication précédente,
**caractérisé en ce que**
le réchauffement de l'agent réducteur (2) et/ou le chauffage du réservoir de stockage (1) le long d'une ligne de liaison imaginaire entre le point de recyclage (5) et le point de prélèvement (3) se font au moyen de l'énergie thermique du circuit de refroidissement et/ou du circuit de lubrification et/ou du circuit d'échappement et/ou au moyen de l'énergie thermique d'éléments de chauffage alimentés par le réseau électrique embarqué du véhicule à moteur.

3. Dispositif pour réchauffer un agent réducteur pour le traitement postérieur de gaz d'échappement dans un réservoir de stockage d'un véhicule à moteur, un point de prélèvement (3) et un point de recyclage (5) étant prévus sur le réservoir de stockage (1), le point de prélèvement (3) et le point de recyclage (5) étant reliés entre eux par un écoulement en dehors du réservoir de stockage (1), avec un échangeur de chaleur (6, 11, 28) prévu pour réchauffer l'agent réducteur (2) à l'extérieur du réservoir de stockage (1) entre le point de prélèvement (3) et le point de recyclage (5),
**caractérisé en ce que**
le réservoir de stockage (1) peut être chauffé le long d'une ligne de liaison imaginaire entre le point de recyclage (5) et le point de prélèvement (3).

4. Dispositif selon la revendication 3,
**caractérisé en ce qu'**
une pompe (7, 30) est intégrée dans le raccord d'écoulement (4, 10) pour augmenter le débit.

5. Dispositif selon la revendication 4,
**caractérisé en ce que**
la pompe (7, 30) peut être chauffée.

6. Dispositif selon la revendication 4 ou 5,
**caractérisé en ce que**
la pompe (30) sert alternativement ou parallèlement pour l'injection de l'agent réducteur (2) dans le circuit d'échappement.

7. Dispositif selon la revendication 3,
**caractérisé en ce que**
le réchauffement se fait au moyen d'un échangeur de chaleur (11, 28) monté entre le point de prélèvement (3) et le point de recyclage (5).

8. Dispositif selon la revendication 3,
**caractérisé en ce que**
le réchauffement se fait au moyen d'un dispositif de chauffage électrique.

9. Dispositif selon l'une des revendications 3 à 8,
**caractérisé en ce que**
le raccord d'écoulement (4, 10) est conçu entre le point de prélèvement (3) et le point de recyclage (5) de manière à ne pas pouvoir être endommagé par le gel de son contenu.

10. Dispositif selon la revendication 9,
**caractérisé en ce que**
le raccord d'écoulement (4, 10) est élastique au moins en partie, de sorte qu'il suit la dilatation volumique de son contenu lors du gel.

11. Dispositif selon l'une des revendications 3 à 10,
**caractérisé en ce que**
l'échangeur de chaleur (11, 28) tire son énergie de l'eau de refroidissement et/ou de l'huile de lubrification et/ou des gaz d'échappement et/ou de l'air de suralimentation chauffé et/ou du courant électrique du réseau embarqué du véhicule à moteur.
